# EUROPEAN PATENT SPECIFICATION

(11) **EP 0 607 689 B1**
(45) Date of publication and mention of the grant of the patent: **12.03.1997**
(21) Application number: 93310321.0
(22) Date of filing: 20.12.1993
(51) Int. Cl.: B60C 23/06

(54) **Automatic initialisation method applied to device for detecting pneumatic abnormalities on the basis of variations in angular velocity of tyre**
Verfahren zur automatischen Initialisierung einer Detektionsvorrichtung für Reifenfehler auf der Basis einer Änderung Drehgeschwindigkeiten der Reifen
Procédé d'initialisation automatique d'un dispositif de détection d'anomalies de pneumatiques, basé sur des variations de vitesse angulaire des pneumatiques

(30) Priority: 21.12.1992 JP 339998/92
(43) Date of publication of application: 27.07.1994
(73) Proprietor: Sumitomo Rubber Industries Ltd., Kobe-shi, Hyogo-ken (JP)
(72) Inventor: Kishimoto, Yoshikazu, Kakogawa Green City D302, Kakogawa-shi, Hyogo-ken (JP); Yanase, Minao, Nishiku, Kobe-shi, Hyogo-ken (JP)
(74) Representative: Stewart, Charles Geoffrey

(56) References cited:
- EP-A- 0 219 217
- EP-A- 0 466 535
- EP-A- 0 512 745
- DE-A- 3 236 520

## Description

The present invention relates to a method of automatic initialisation of a system in a device for detecting pneumatic abnormalities of a tyre on the basis of variations in angular velocity of the tyre, as known from EP-A-0 466 535.

When the pneumatic pressure of a tyre on a vehicle varies, the angular velocity of rotation of the tyre varies even if the vehicle is driving at a constant speed. With this relationship there have been proposed some methods for detecting pneumatic abnormalities of a tyre by mutually comparing the angular velocities of the tyres.

For example, in the Japanese Unexamined Patent Publication No 305011/1988 corresponding to EP-A-0 291 217, a method which gives an alarm of pressure loss of a tyre to a drive is disclosed. In the method the angular velocity of each tyre is detected and the respective sums of angular velocities of the diagonally opposite pairs of tyres are monitored. If the difference between the sums is in the range of 0.05% to 0.6% with respect to the average of the sums and the difference between the angular velocity of either one of the tyres and the average value of the four tyres is not less than 0.1%, an alarm of pressure deflation is given.

However, the tyres fitted to a vehicle are not always the same in standard and there is a dispersion in the circumferential length even when the tyres are the same standard tyres. Further, the weight on each tyre is different from one another. The tyres of one vehicle therefore rotate respectively at different angular velocities even when the vehicle is driven with tyres under normal pneumatic pressure. Thus, in the device utilising the above-mentioned principle, it is required to previously correct for the dispersion of angular velocities of rotation of the tyre fitted under normal pneumatic pressure. The correction is generally called "initialisation".

The initialisation causes the dispersion at an initial stage to be corrected by obtaining a ratio of the angular velocity of each tyre under normal pneumatic pressure. However, a wrong correction could be made by initialisation for example when the vehicle is turning a corner. Therefore drivers are annoyed that they must keep the vehicle at a constant speed and must run a straight course during the initialisation.

It is an object of the invention to provide a method of automatic initialisation with high precision which allows drivers to save their labour by measuring the acceleration in the lateral direction or the steering angle of a vehicle and automatically picking up the data within a specific range.

In accordance with the present invention, there is provided an automatic initialisation method for a device for detecting pneumatic abnormality of a tyre on the basis of variations in angular velocity of rotation of the tyre, wherein the method comprises measuring the angular velocity of each of the tyres of a vehicle under normal tyre pressure to obtain ratios of the angular velocity of rotation of the tyres as correction values, characterised by the steps of measuring and monitoring the acceleration of the vehicle in a lateral direction, and calculating the correction values by using only data for angular velocity of rotation of each tyre when the acceleration of the vehicle in the lateral direction is in the range from -0.03g to +0.03g.

Also, according to the method of the present invention, correction values can be obtained by measuring and monitoring the steering angle of a vehicle and using only data for the angular velocity of rotation of each tyre when the steering angle ranges from -15° to +15°.

Further, according to the method of the present invention, correction values can be obtained by measuring and monitoring both the acceleration in the lateral direction and the steering angle of the vehicle and using only data for the angular velocity of rotation of each tyre when the acceleration in the lateral direction ranges from -0.03g to +0.03g and when the steering angle ranges from -15° to +15°.

Thus in the method only date for angular velocity of rotation of each tyre is utilised when the acceleration in the lateral direction and the steering angle are within the specific ranges. The data is automatically picked up and used to perform the initialisation of the device for detecting pneumatic abnormalities of a tyre.

The automatic initialisation method of the present invention is described herebelow.

Firstly the acceleration in the lateral direction of the vehicle is measured by a lateral acceleration sensor such as a piezo-electric acceleration transducer or a strain gauge acceleration transducer, mounted on the vehicle. The measured acceleration is monitored with a microcomputer or the like.

On the other hand, the angular velocity of rotation of each tyre is measured by a rotation pulse generator or the like which is also monitored by a microcomputer or the like.

Correction values are obtained by using only the data, which is automatically picked up by the microcomputer or the like, for the angular velocity of rotation of each tyre when the acceleration in the lateral direction ranges from -0.03g to +0.03g (g : acceleration of gravity). When the acceleration in the lateral direction is out of the range, the measured data is not used because turning of the vehicle makes a difference between the angular velocities of the inner tyre and the outer tyre so that wrong correction values would be made.

When under normal inflation conditions for each tyre, the angular velocities of rotation of four tyres may be denoted A, B, C and respectively. The correction values for four tyres are defined as for example, Ac = A/A, Bc= A/B, Cc = A/C and Dc = A/D respectively. That is, if the angular velocities of rotation under normal conditions of each tyre are detected to be A = 1.0, B = 1.5, C = 1.0 and D = 1.0 at an initialisation, the correction values are Ac= 1.0, Bc = 0.9524, Cc = 1.0 and Dc = 1.0 respectively. Then if the detected angular velocities of four tyres are A' = 2.0, B' = 2.10, C' = 2.0 and D' = 2.0 when the vehicle is driven, then tyre B is seen as a deflated one unless any correction is performed, though in this case the pneumatic pressure of each tyre is normal. However, the detected value of angular velocity of each tyre is multiplied by the correction value so that Ac x A' (=2.0), Bc x B' (=2.0), Cc x C' (=2.0) and Dc x D' (=2.0) are used respectively as the angular velocity of each tyre. Hence, it is determined that the pneumatic pressure of all the tyres is normal.

Instead of the acceleration in the lateral direction, the steering angle with respect to the driving direction may be measured by a steering angle sensor such as a rotational angle meter utilising a potentiometer or the like mounted on the vehicle. The angle is monitored by a microcomputer or the like.

With steering angle monitoring the correction values are obtained by using only the data, which is automatically picked up by the microcomputer (using the program included therein) for the angular velocity of rotation of each tyre when the steering angle is in the range from -15° to +15° (the steering angle is 0° when the vehicle follows a straight course). When the steering angle is out of the range, it is known that the vehicle is turning and the measured data cannot be used because the turning make the differences among the angular velocities of the tyres such that accurate correction values cannot be obtained. The correction values are handled in the same manner as stated above.

Further, both the acceleration sensor in the lateral direction and the steering angle sensor are preferably mounted on the vehicle. In that case, only data for the angular velocity of rotation of each tyre is used when the angular velocity in the lateral direction ranges from -0.03g to +0.03g and the steering angle ranges from -15° to +15°, and this data is then used for obtaining the correction values. In such a case, the initialisation is even more accurate than those in the above embodiments.

When the initialisation of the device for detecting pneumatic abnormalities is performed according to the above methods, once a driver presses the start button for initialisation, only data for the angular velocities of tyres is used in the optimum driving conditions and initialisation is performed with high precision.

It is to be understood that the present invention is not limited only to the above-mentioned and various changes and modifications may be made in the invention without departing from the terms of the claims.

## Claims

1. An automatic initialisation method for a device for detecting pneumatic abnormality of a tyre on the basis of variations in angular velocity of rotation of the tyre, wherein the method comprises measuring the angular velocity of each of the tyres of a vehicle under normal tyre pressure to obtain ratios of the angular velocity of rotation of the tyres as correction values, characterised by the steps of measuring and monitoring the acceleration of the vehicle in a lateral direction, and calculating the correction values by using only data for angular velocity of rotation of each tyre when the acceleration of the vehicle in the lateral direction is in the range from -0.03g to +0.03g.

2. A method according to claim 1 characterised in that the measuring of the acceleration is by means of an accelerometer.

3. An automatic initialisation method for a device for detecting pneumatic abnormality of a tyre on the basis of variations in angular velocity of rotation of the tyre, wherein the method comprises measuring the angular velocity of each of the tyres of a vehicle under normal tyre pressure to obtain ratios of the angular velocity of rotation of the tyres as correction values, characterised by the steps of measuring and monitoring the steering angle of the vehicle, and obtaining the correction values by using only data for the angular velocity of rotation of each tyre when the steering angle of the vehicle is in the range of -15° to +15°.

4. An automatic initialisation method in a device for detecting pneumatic abnormality of a tyre on the basis of variations of angular velocity of rotation of the tyre, wherein the method comprises measuring the angular velocity of each of the tyres of a vehicle under normal tyre pressure to obtain ratios of the angular velocity of rotation of the tyres as correction values, characterised by the steps of measuring and monitoring acceleration of a vehicle in the lateral direction, measuring and monitoring steering angle of the vehicle and obtaining the correction values by using only data of angular velocity of rotation of each tyre when the acceleration in the lateral direction ranges from - 0.03g to +0.03g and the steering angle of the vehicle ranges from -15° to +15°.

## Patentansprüche

1. Ein automatisches Initialisierungsverfahren für eine Vorrichtung zum Detektieren einer Luftanomalie eines Reifens auf Basis von Variationen der Rotationswinkelgeschwindigkeit des Reifens, worin das Verfahren umfaßt, daß die Winkelgeschwindigkeit jedes Reifens eines Fahrzeuges unter normalem Reifendruck gemessen wird, um Verhältnisse der Rotationswinkelgeschwindigkeit der Reifen als Korrekturwerte zu erhalten, gekennzeichnet durch die Schritte, daß die Beschleunigung des Fahrzeuges in einer seitlichen Richtung gemessen und überwacht wird, und die Korrekturwerte berechnet werden, indem nur Daten für die Rotationswinkelgeschwindigkeit jedes Reifens verwendet werden, wenn die Beschleunigung des Fahrzeuges in der seitlichen Richtung im Bereich zwischen -0,03 g bis +0,03 g liegt.

2. Ein Verfahren nach Anspruch 1, dadurch gekennzeichnet, daß das Messen der Beschleunigung mittels eines Beschleunigungsmessers erfolgt.

3. Ein automatisches Initialisierungsverfahren für eine Vorrichtung zum Detektieren einer Luftanomalie eines Reifens auf Basis von Variationen der Rotationswinkelgeschwindigkeit des Reifens, worin das Verfahren umfaßt, daß die Winkelgeschwindigkeit jedes Reifens eines Fahrzeuges unter normalem Reifendruck gemessen wird, um Verhältnisse der Rotationswinkelgeschwindigkeit der Reifen als Korrekturwerte zu erhalten, gekennzeichnet durch die Schritte, daß der Lenkwinkel des Fahrzeuges gemessen und überwacht wird, und die Korrekturwerte erhalten werden, indem nur Daten für die Rotationswinkelgeschwindigkeit jedes Reifens verwendet werden, wenn der Lenkwinkel des Fahrzeuges im Bereich zwischen -15° bis +15° liegt.

4. Ein automatisches Initialisierungsverfahren in einer Vorrichtung zum Detektieren einer Luftanomalie eines Reifens auf Basis von Variationen der Rotationswinkelgeschwindigkeit des Reifens, worin das Verfahren umfaßt, daß die Winkelgeschwindigkeit jedes Reifens eines Fahrzeuges unter normalem Reifendruck gemessen wird, um Verhältnisse der Rotationswinkelgeschwindigkeit der Reifen als Korrekturwerte zu erhalten, gekennzeichet durch die Schritte, daß die Beschleunigung eines Fahrzeuges in der seitlichen Richtung gemessen und überwacht wird, der Lenkwinkel des Fahrzeuges gemessen und überwacht wird, und die Korrekturwerte erhalten werden, indem nur Daten der Rotationswinkelgeschwindigkeit jedes Reifens verwendet werden, wenn die Beschleunigung in der seitlichen Richtung zwischen -0,03 g bis +0,03 g liegt, und der Lenkwinkel des Fahrzeuges zwischen -15° bis +15° liegt.

## Revendications

1. Procédé d'initialisation automatique d'un appareil de détection d'une anomalie pneumatique d'un pneumatique en fonction de variations de vitesse angulaire de rotation du pneumatique, le procédé comprenant la mesure de la vitesse angulaire de chacun des pneumatiques d'un véhicule à une pression normale, afin que des rapports de vitesses angulaires de rotation des pneumatiques soient obtenus sous forme de valeurs de correction, caractérisé par la mesure et le contrôle de l'accélération du véhicule en direction latérale, et par le calcul des valeurs de correction par utilisation des données de vitesse angulaire de rotation de chaque pneumatique uniquement lorsque l'accélération du véhicule en direction latérale est comprise entre -0,03 g et +0,03 g.

2. Procédé selon la revendication 1, caractérisé en ce que la mesure de l'accélération est réalisée à l'aide d'un accéléromètre.

3. Procédé d'initialisation automatique d'un appareil de détection d'une anomalie pneumatique d'un pneumatique en fonction des variations de vitesse angulaire de rotation du pneumatique, le procédé comprenant la mesure de la vitesse angulaire de chacun des pneumatiques d'un véhicule à une pression normale pour l'obtention de rapports des vitesses angulaires de rotation du pneumatique sous forme de valeurs de correction, caractérisé par des étapes de mesure et de contrôle de l'angle de direction du véhicule, et d'obtention des valeurs de correction par utilisation des données de vitesse angulaire de rotation des pneumatiques qui sont obtenues uniquement lorsque l'angle de direction du véhicule est compris entre -15° et +15°.

4. Procédé d'initialisation automatique dans un appareil de détection d'une anomalie pneumatique d'un pneumatique en fonction de variations de la vitesse angulaire de rotation du pneumatique, le procédé comprenant la mesure de la vitesse angulaire de chacun des pneumatiques d'un véhicule à une pression normale pour l'obtention de rapports des vitesses angulaires de rotation des pneumatiques sous forme de valeurs de correction, caractérisé par des étapes de mesure et de contrôle de l'accélération du véhicule en direction latérale, de mesure et de contrôle de l'angle de direction du véhicule et d'obtention de valeurs de correction par utilisation des données de vitesse angulaire de rotation de pneumatique uniquement lorsque l'accélération en direction latérale est comprise entre -0,03 g et +0,03 g et lorsque l'angle de direction du véhicule est compris entre -15° et +15°.
